# EUROPÄISCHE PATENTSCHRIFT

(11) **EP 0 766 535 B1**
(45) Veröffentlichungstag und Bekanntmachung des Hinweises auf die Patenterteilung: **30.12.1998**
(21) Anmeldenummer: 95919334.3
(22) Anmeldetag: 26.05.1995
(51) Int. Cl.: A61C 5/02, A61C 17/02

(54) **VORRICHTUNG ZUM REINIGEN VON HOHLRÄUMEN**
DEVICE FOR CLEANING CAVITIES
DISPOSITIF PERMETTANT DE NETTOYER DES CAVITES

(30) Priorität: 20.06.1994 DE 4421503
(43) Veröffentlichungstag der Anmeldung: 09.04.1997
(73) Patentinhaber: BIOVISION GmbH Entwicklung, Herstellung und Vertrieb von Biomaterialien, D-98693 Ilmenau (DE)
(72) Erfinder: GROSREY, Jean, CH-1261 Arzier (CH)
(74) Vertreter: RACKETTE Partnerschaft Patentanwälte
(86) Internationale Anmeldenummer: DE9500714
(87) Internationale Veröffentlichungsnummer: WO9535069

(56) Entgegenhaltungen:
- EP-A- 0 299 919
- EP-A- 0 422 716
- WO-A-92/12685
- DE-C- 860 839

## Beschreibung

Die Erfindung betrifft eine Vorrichtung zum Reinigen von Hohlräumen, insbesondere von Zahnhöhlen und Zahnwurzelkanälen, mit wenigstens einer Zuflußleitung zum Zuführen einer Spüllösung zu dem Hohlraum sowie wenigstens einer Abflußleitung zum Abführen der Spüllösung von dem Hohlraum, wobei der Durchfluß der Spüllösung durch ein Druckgefälle von der Zuflußleitung zu der Abflußleitung verursacht ist, und mit einer Einrichtung, mit der mittels eines über ein Verbindungselement mit dem Hohlraum in Verbindung stehenden Druckwechselgenerators in dem Hohlraum Kavitation mit Erzeugung und Implosion von Gasblasen hervorrufbar ist.

Eine derartige Vorrichtung ist aus der WO 92/12685 bekannt. Bei dieser Vorrichtung ist eine Spüllösung über eine Einlaßleitung einer Kolbenpumpe zuführbar. Die Kolbenpumpe steht über ein Verbindungselement mit einer Zahnhöhle in Verbindung, das durch eine Zuflußleitung und eine über ein Anschlußstück an die Zuflußleitung angeschlossene Verbindungsleitung gebildet ist. Das Anschlußstück weist im Mündungsbereich der Anschlußleitung einen Saugabschnitt mit in Strömungsrichtung abnehmendem Durchmesser nach Art einer Venturi-Düse auf. In der Kompressionsphase der Kolbenpumpe ist die Einlaßleitung durch ein Ventil verschließbar, so daß die Spüllösung über das Verbindungselement der Zahnhöhle mit sich anschließenden Wurzelkanälen zuführbar ist. Durch die Erhöhung der Strömungsgeschwindigkeit der Spüllösung im Bereich des Saugabschnittes ist in der Kompressionsphase der statische Druck in der Zahnhöhle unterhalb des Dampfdruckes einer der Zahnhöhle zugeführten Behandlungslösung erniedrigt, so daß in der Verbindungsleitung, der Zahnhöhle und den Wurzelkanälen Gasblasen gebildet werden.

In der Rückzugsphase des Kolbens nimmt die Strömungsgeschwindigkeit der Spüllösung ab und folglich der statische Druck im Bereich des Saugabschnittes des Anschlußstückes zu, so daß die in der Kompressionsphase gebildeten Gasblasen bei Überschreiten des Dampfdruckes implodieren. Diese unter dem Begriff Kavitation bekannte Erscheinung führt zu einer Spülung und Reinigung insbesondere auch der mikrostrukturierten Wände der Zahnhöhle und der Wurzelkanäle.

Mit dieser Vorrichtung ist zwar insbesondere bei einer Wurzelbehandlung auch an Klein- und Mikrostrukturen eine hohe Reinigungswirkung erreichbar, allerdings sind die Abmessungen dieser Vorrichtung bedingt durch den Aufbau der Pumpeinrichtung mit einem im Takt des Kolbens zu betätigenden Ventils verhältnismäßig groß. Weiterhin treten bedingt durch die verhältnismäßig große Länge der Zuflußleitung zu der Zahnhöhle Druckverluste auf, die durch einen verhältnismäßig hohen Ausgangsdruck der Kolbenpumpe zu kompensieren sind. Insbesondere bei der Reinigung von Wurzelkanälen jedoch ist zu vermeiden, daß Spüllösung und der Behandlungslösung durch die Wurzelkanäle in den Körperkreislauf gelangt, so daß der hohe Arbeitsdruck der Kolbenpumpe genauestens zu kontrollieren ist. Beispielsweise muß die Länge und der Durchmesser der Zuflußleitung genau spezifiziert sein, damit sich im Bereich des Saugabschnittes die erforderlichen Druckverhältnisse einstellen. Eine Anpassung der Vorrichtung an spezifische Einsatzbedingungen ist somit verhältnismäßig aufwendig, da sich bauliche Veränderungen verhältnismäßig stark auf die Druckverhältnisse an dem Saugabschnitt auswirken und eine ordnungsgemäße Funktionsweise der Vorrichtung nachteilig beeinflussen können. Weiterhin ist das Arbeiten mit zwei Lösungskreisläufen verhältnismäßig aufwendig.

Aus der CH 657 520 A5 ist eine Vorrichtung zur Reinigung von Zahnwurzelkanälen bekannt, bei der über ein langes, tief in den Wurzelkanal einschiebbares Zufuhrröhrchen Spüllösung einbringbar ist. Das Zufuhrröhrchen ist von einem kürzeren Abzugsröhrchen umgeben, dessen Ende nur wenig durch die Zahnkrone hindurch in die Zahnhöhle eintritt und an eine Vakuumpumpe, beispielsweise eine Wasserstrahlpumpe, angeschlossen ist. Das Zufuhrröhrchen steht mit einem mit Spüllösung gefüllten Vorratsbehälter in Verbindung.

Bei Anlegen eines Unterdruckes an das aus der Zahnhöhle herausragende Ende des Abzugsröhrchens wird durch das Zufuhrröhrchen hindurch Spüllösung in den Wurzelkanal und die Zahnhöhle durchgezogen, wobei aufgrund einer vollständigen Trennung des Saugraumes und des Zuflußraumes keine Durchmischung von sauberer Spüllösung und infizierter Flüssigkeit stattfindet. Mit dieser Vorrichtung werden zwar aufgrund der tiefen Einschiebbarkeit des Zufuhrröhrchen in den Wurzelkanal beim glattwandigen Wurzelkanälen gute Behandlungsergebnisse erzielt, allerdings ist in manchen Fällen insbesondere bei aufgerauhten Wurzelkanälen aufgrund der wegen der Schmerzbelastung des behandelten Patienten geringen ausgeübten Drücke ein nur ungenügendes therapeutisches Ergebnis erzielt.

Der Erfindung liegt die Aufgabe zugrunde, eine Vorrichtung der eingangs genannten Art zu schaffen, die sich bei einer hohen Reinigungswirkung durch einen kleinen, konstruktiv einfachen Aufbau und damit einer problemlosen Handhabung sowie Anpassungsfähigkeit an verschiedene Einsatzverhältnisse auszeichnet.

Diese Aufgabe wird erfindungsgemäß dadurch gelöst, daß der Durchfluß der Spüllösung durch ein bezüglich der Schwerkraft höher als ein Auffangbehältnis vorgesehenes Vorratsbehältnis zum Verursachen des Druckgefälles erzeugt ist, wobei in Abhängigkeit des Höhenunterschiedes zwischen den Behältnissen der Durchfluß der Spüllösung sowie die Kavitationsverhältnisse einstellbar sind, und daß die an den Druckwechselgenerator angeschlossene Zuflußleitung und Abflußleitung bestimmte Strömungswiderstände aufweisen, bei denen einerseits durch den Druckwechselgenerator der Druckunterschied zum Hervorrufen der Kavitation erzeugbar ist und andererseits bei dem bestimmten Höhenunterschied zwischen den Behältnissen der Durchfluß der Spüllösung von der Zuflußleitung zu der Abflußleitung auftritt.

Die den Durchfluß der Spüllösung hervorrufenden konstanten Druckverhältnisse sind in einfacher Weise kontrollierbar, so daß mit einer mechanisch einfachen Anordnung die gewünschten Druckverhältnisse einstellbar sind. Weiterhin ist durch die Auslegung der Strömungswiderstände der Zuflußleitung und der Abflußleitung gewährleistet, daß einerseits ein zum Abführen von gelöstem Material ausreichender Durchfluß der Spüllösung von der Zuflußleitung zu der Abflußleitung auftritt und andererseits der zum Hervorrufen der Kavitation mit einer Zirkulation der Spüllösung in dem Hohlraum erforderliche Druckunterschied erzeugt ist. Dadurch sind kleinste Mengen an Spüllösung zur Reinigung ausreichend und insbesondere ist nur ein einziger Lösungskreislauf erforderlich.

In einem bevorzugten Ausführungsbeispiel sind die Zuflußleitung und die Abflußleitung über Abschnitte mit reduziertem Querschnitt an den Druckwechselgenerator angeschlossen. Der Durchfluß der Spüllösung ist durch einen gleichbleibenden Druckunterschied zwischen einem gegenüber einem Auffangbehältnis höher angeordneten Vorratsbehältnis hervorgerufen. Der Druckwechselgenerator ist durch eine durch einen Elektromotor angetriebene Kolbenpumpe gebildet und über eine kurze, in einen Pumpraum mündende Verbindungsleitung an den Hohlraum angeschlossen. In Abhängigkeit des Höhenunterschiedes zwischen den Behältnissen und der Drehzahl des Elektromotors sind in einfacher Weise zum einen der Durchfluß der Spüllösung und zum anderen die Kavitationsverhältnisse einstellbar.

Weitere Vorteile und zweckmäßige Ausgestaltungen der Erfindung sind Gegenstand der Unteransprüche und der nachfolgenden Figurenbeschreibung. Es zeigen:
- Fig. 1: in einer schematischen Darstellung eine Vorrichtung zum Reinigen einer Zahnhöhle und eines Wurzelkanales, bei der die Zuflußleitung und die Abflußleitung jeweils einen Abschnitt mit reduziertem Querschnitt aufweisen,
- Fig. 2: in einer teilgeschnittenen, vergrößerten Seitenansicht einen als Kolbenpumpe ausgelegten Druckwechselgenerator und
- Fig. 3: in einer teilgeschnittenen, vergrößerten stirnseitigen Ansicht den Druckwechselgenerator gemäß Fig. 2.

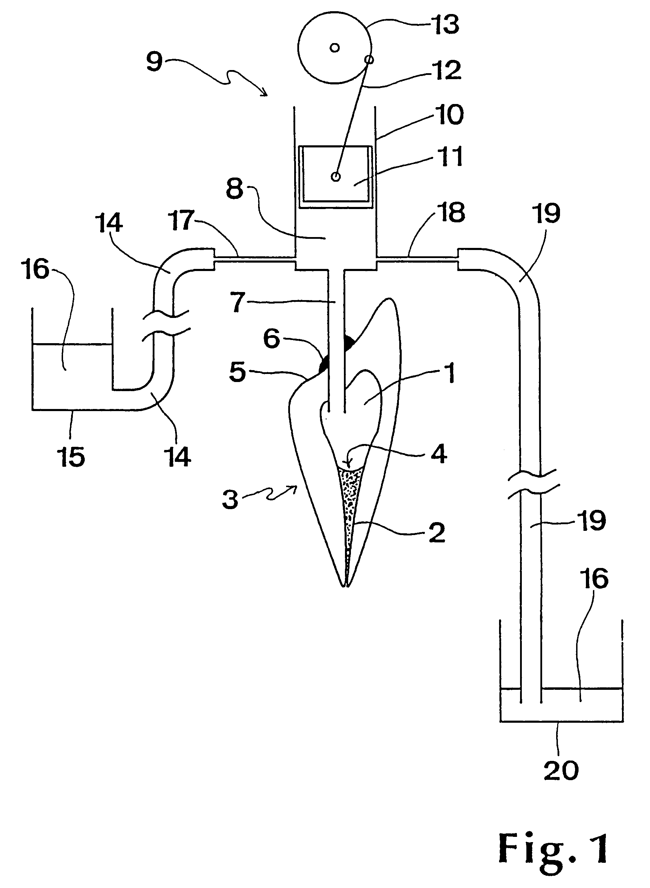

Fig. 1 zeigt in einer schematischen Darstellung eine Vorrichtung zum Reinigen von einem durch eine Zahnhöhle 1 und einen Wurzelkanal 2 eines Zahnes 3 gebildeten Hohlraumes. In der Darstellung gemäß Fig. 1 ist der Wurzelkanal 2 mit noch zu entfernender Pulpa 4 gefüllt. Durch eine in der Zahnkrone 5 eingebrachte Bohrung ist in die Zahnhöhle 1 eine im Bereich der Zahnkrone 5 von einer Dichtungsmasse 6 umgebene Verbindungsleitung 7 eingeführt. Die Verbindungsleitung 7 mündet mit dem anderen Ende in einen Arbeitsraum 8 eines Druckwechselgenerators 9. In dem in Fig. 1 dargestellten Ausführungsbeispiel weist der Druckwechselgenerator 9 einen in einem Zylinder 10 laufenden Kolben 11 auf, der über ein Antriebspleuel 12 mit einer durch einen in Fig. 1 nicht dargestellten Motor angetriebenen Kurbelwelle 13 verbunden ist.

An den Arbeitsraum 8 des Druckwechselgenerators 9 ist eine in Fig. 1 verkürzt dargestellte Zuflußleitung 14 angeschlossen, die in ein unter Atmosphärendruck stehendes Vorratsbehältnis 15 mündet. Das mit einer Spüllösung 16, beispielsweise einer zwei- bis dreiprozentigen NaOCl-Lösung, angefüllte Vorratsbehältnis 15 befindet sich in der in Fig. 1 dargestellten Anordnung in Richtung der Schwerkraft etwa in der Höhe des in die Zahnhöhle 1 einmündenden Abschnittes der Verbindungsleitung 7. Die Zuflußleitung 14 mündet mit einem Zuflußverengungsabschnitt 17 mit einem verringerten Querschnitt in den Arbeitsraum 8.

Weiterhin ist an den Arbeitsraum 8 über einen Abflußverengungsabschnitt 18 mit verringertem Querschnitt eine in Fig. 1 verkürzt dargestellte Abflußleitung 19 angeschlossen, die mit ihrem anderen Ende in ein Auffangbehältnis 20 mündet. Das Auffangbehältnis 20 ist in dem in Fig. 1 dargestellten Ausführungsbeispiel in Richtung der Schwerkraft unterhalb des durch die Zahnhöhle 1 und den Wurzelkanal 2 gebildeten Hohlraumes angeordnet.

Die Verengungsabschnitte 17, 18 bilden im Vergleich zu dem ansonsten gleichbleibenden Querschnitt der Zuflußleitung 14 und der Abflußleitung 19 die wesentlichen Strömungswiderstände in der Zuflußleitung 14 und der Abflußleitung 19. Die Strömungswiderstände der Zuflußleitung 14 und der Abflußleitung 19 sind so ausgelegt, daß einerseits durch die bei Vergrößerung beziehungsweise Verringerung des Volumens des Arbeitsraumes 8 auftretenden Druckunterschiede, die durch die Strömungswiderstände der Verengungsabschnitte 17, 18 induziert sind, Kavitation mit Erzeugung beziehungsweise Implosion von Gasblasen hervorgerufen ist und andererseits durch das Anordnen des Vorratsbehältnisses 15 in der Höhe der Verbindungsleitung 7 sowie das Vorsehen des Auffangbehältnisses 20 unterhalb des durch die Zahnhöhle 1 und den Wurzelkanal 2 gebildeten Hohlraumes ein Durchfluß von Spüllösung 16 durch die Zuflußleitung 14 und die Abflußleitung 19 auftritt.

Durch die Erzeugung und Implosion der Luftblasen in der Zahnhöhle 1 und dem Wurzelkanal 2 findet neben einer Auflösung der Pulpa 4 und Reinigung der Mikrostrukturen an den Wänden der Zahnhöhle 1 und des Wurzelkanales 2 eine Zirkulation der Spüllösung 16 zwischen dem Arbeitsraum 8 und der Zahnhöhle 1 beziehungsweise dem Wurzelkanal 2 mit einem Transport von gelösten Material der Pulpa 4 in den Arbeitsraum 8 statt. Durch den Durchfluß der Spüllösung 16 von dem Vorratsbehältnis 15 in das Auffangbehältnis 20 ist das gelöste Material abtransportierbar.

Bei der Behandlung eines Zahnes 3 ist es zweckmäßig, den Höhenunterschied zwischen dem Auffangbehältnis 15 und der Zahnhöhle 1 beziehungsweise dem Wurzelkanal 2 verhältnismäßig klein zu halten, um ein Austreten von Spüllösung 16 aus dem Wurzelkanal 2 in den Körperkreislauf zu vermeiden. Bei der Reinigung von abgeschlossenen Hohlräumen, beispielsweise im technischen Bereich, ist es zum Erzielen einer großen Reinigungswirkung in kurzer Zeit vorteilhaft, das Vorratsbehältnis 15 oberhalb des zu reinigenden Hohlraumes anzuordnen, um einen großen Durchfluß von Spüllösung 16 zu erzielen. Ist es erwünscht, den Durchfluß der Spüllösung 16 allein durch den hydrostatischen Druck in der Zuflußleitung 14 hervorzurufen, ist das Vorratsbehältnis 15 oberhalb des Hohlraumes und das Auffangbehältnis 20 in der Höhe des Hohlraumes angeordnet.

Bei einem Beimischen von festen Stoffen, wie beispielsweise Sandkörner, in der Spüllösung 16 zum Erzielen eines Abrasionseffektes an den Wänden des Hohlraumes kann es zweckmäßig sein, die Strömungswiderstände der Zuflußleitung 16 und der Abflußleitung 19 anstatt mit Verengungsabschnitten 17, 18 durch mehrfache Umbiegungen zu erhöhen. In anderen, nicht dargestellten Ausführungsbeispielen kann eine Erhöhung der Strömungswiderstände beispielsweise durch eine aufgerauhte Oberfläche oder durch eine Abfolge von Querschnittsverengungen kurzer Länge vorgesehen sein. Insbesondere bei einer Zuflußleitung 14 und Abflußleitung 19 mit jeweils einer verhältnismäßig kurzen Länge kann es aus fertigungstechnischen Gründen zweckmäßig sein, einen verhältnismäßig kleinen Querschnitt über die gesamte Länge vorzusehen. Zum Vermeiden von Schleifspuren an der Berührungsfläche des Zylinders 10 und des Kolbens 11 ist in einem nicht dargestellten Ausführungsbeispiel eine elastische Membran als Abschluß des Arbeitsraumes 8 vorgesehen, mit der bei einer Anregung von Schwingungen das Volumen des Arbeitsraumes 8 periodisch änderbar ist.

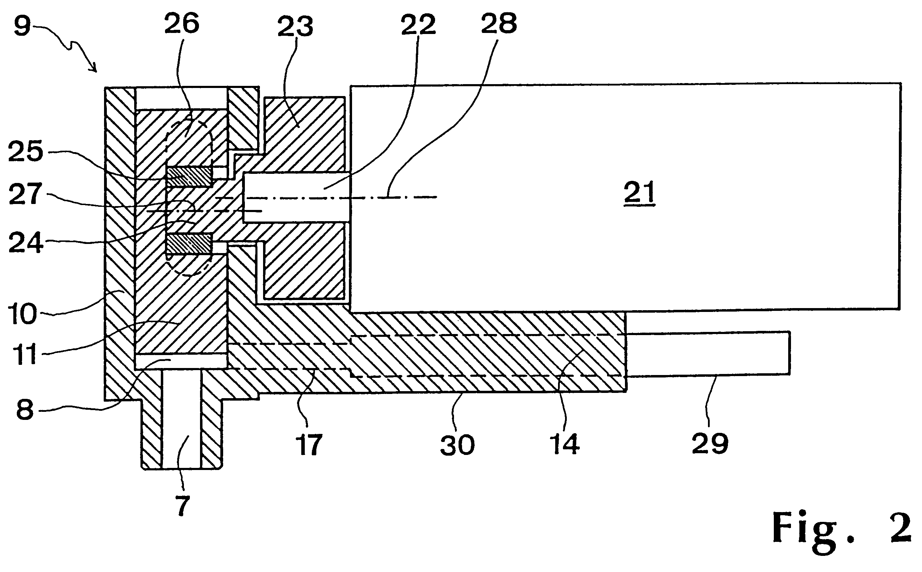

Fig. 2 zeigt in einer vergrößerten, teilgeschnittenen Seitenansicht einen von einem Elektromotor 21 angetriebenen Druckwechselgenerator 9. Die Drehfrequenz des Elektromotors 21 ist mit einer in Fig. 2 nicht dargestellten Steuereinheit einstellbar. Die Drehachse 22 des Elektromotors 21 ist an einem Antriebsexzenter 23 befestigt, der eine bezüglich der Drehachse 22 versetzt angeordnete Exzenterachse 24 aufweist. Die Exzenterachse 24 greift in eine Gleitfassung 25 ein, die in einer Führungsausnehmung 26 des Kolbens 11 verschiebbar gelagert ist. Bei Drehen der Drehachse 22 ist durch Verschieben der Gleitfassung 25 der durch den Abstand der Mittelachse 27 der Exzenterachse 24 von der Mittelachse 28 der Drehachse 22 festgelegte Hub auf den Kolben 11 übertragbar.

In dem in Fig. 2 dargestellten Ausführungsbeispiel des Druckwechselgenerators 9 ist der Zylinder 10 einstückig mit einem die Verbindungsleitung 7 sowie Anschlußstücke 29 für die Zuflußleitung 14 und die in Fig. 2 nicht dargestellte Abflußleitung 19 mit den Verengungsabschnitten 17, 18 aufweisenden Grundkörper 30 gefertigt.

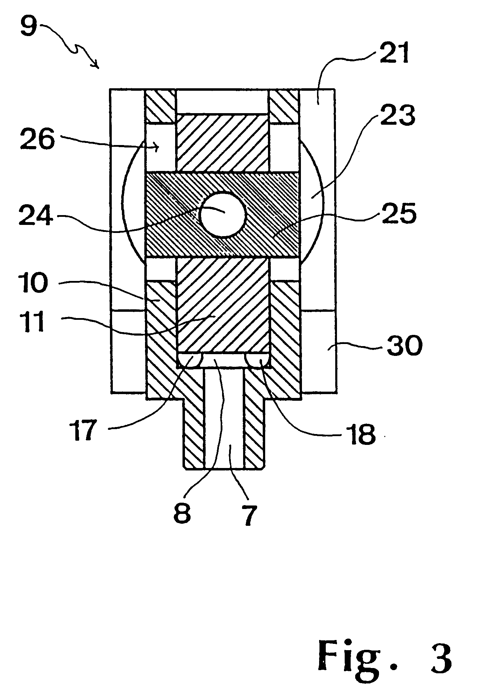

Fig. 3 zeigt in einer teilgeschnittenen, vergrößerten stirnseitigen Ansicht den Druckwechselgenerator 9 gemäß Fig. 2. Die Gleitfassung 25 ist zu der Verschieberichtung des Kolbens 11 quer verschiebbar in der Führungsausnehmung 26 gelagert. Die Verengungsabschnitte 17, 18 münden in dem der Verbindungsleitung 7 benachbarten Bereich in den Arbeitsraum 8. Die Abmessung der Führungsausnehmung 26 in Längsrichtung des Zylinders 10 ist mit geringem Übermaß in Bezug auf den Hub des Kolbens 11 gefertigt, um auch bei höchsten Drehzahlen eine behinderungsfreie Bewegung des Kolbens 11 zu gewährleisten.

Nachfolgend sind in einem speziellen Ausführungsbeispiel, insbesondere für die Anwendung zur Wurzelbehandlung eines Zahnes 3, die Abmessungen und Parameter der den Durchfluß und die Kavitation bestimmenden Bauelementen gegeben. Bei diesem speziellen Ausführungsbeispiel weisen die Verengungsabschnitte 17, 18 auf einer Länge von etwa 5 Millimetern einen Durchmesser von etwa 0,8 Millimetern auf. Die Durchmesser der Zuflußleitung 14 und der Abflußleitung 19 sind jeweils etwa 1,2 Millimeter. Der Durchmesser des Kolbens 11 beträgt etwa 3 Millimeter und der Hub etwa 0,8 Millimeter. Die Drehfrequenz ist zwischen etwa 10000 Umdrehungen pro Minute und etwa 15000 Umdrehungen pro Minute einstellbar. Bei diesen Betriebsdaten ist durch einfaches Verändern des Abstandes zwischen dem sich auf der Höhe der Zahnhöhle 1 angeordneten Vorratsbehältnis 15 und dem Auffangbehältnis 20 zwischen 0 Zentimetern und 50 Zentimetern der Durchfluß an Spüllösung 16 zwischen 0 Milliliter pro Minute und 8 Millilitern pro Minute einstellbar.

## Patentansprüche

1. Vorrichtung zum Reinigen von Hohlräumen, insbesondere von Zahnhöhlen und Zahnwurzelkanälen, mit wenigstens einer Zuflußleitung (14) zum Zuführen einer Spüllösung (16) zu dem Hohlraum (1, 2) sowie wenigstens einer Abflußleitung (19) zum Abführen der Spüllösung (16) von dem Hohlraum (1, 2), wobei der Durchfluß der Spüllösung (16) durch ein Druckgefälle von der Zuflußleitung (14) zu der Abflußleitung (19) verursacht ist, und mit einer Einrichtung, mit der mittels eines über ein Verbindungselement (7) mit dem Hohlraum (1, 2) in Verbindung stehenden Druckwechselgenerators (9) in dem Hohlraum (1, 2) Kavitation mit Erzeugung und Implosion von Gasblasen hervorrufbar ist, **dadurch gekennzeichnet**, daß der Durchfluß der Spüllösung (16) durch ein bezüglich der Schwerkraft höher als ein Auffangbehältnis (20) vorgesehenes Vorratsbehältnis (15) zum Verursachen des Druckgefälles erzeugt ist, wobei in Abhängigkeit des Höhenunterschiedes zwischen den Behältnissen (15, 20) der Durchfluß der Spüllösung (16) sowie die Kavitationsverhältnisse einstellbar sind, und daß die an den Druckwechselgenerator (9) angeschlossene Zuflußleitung (14) und Abflußleitung (19) bestimmte Strömungswiderstände (17, 18) aufweisen, bei denen einerseits durch den Druckwechselgenerator (9) der Druckunterschied zum Hervorrufen der Kavitation erzeugbar ist und andererseits bei dem bestimmten Höhenunterschied zwischen den Behältnissen (15, 20) der Durchfluß der Spüllösung (16) von der Zuflußleitung (14) zu der Abflußleitung (19) auftritt.

2. Vorrichtung nach Anspruch 1, dadurch gekennzeichnet, daß der Druckwechselgenerator (9) einen beweglichen Kolben (11) aufweist, mit dem das Volumen eines Pumpraumes (8) periodisch veränderbar ist.

3. Vorrichtung nach Anspruch 1, dadurch gekennzeichnet, daß der Druckwechselgenerator eine elastische Membran aufweist, mit der das Volumen eines Pumpraumes (8) periodisch veränderbar ist.

4. Vorrichtung nach einem der Ansprüche 2 oder 3, dadurch gekennzeichnet, daß die Frequenz der Volumenveränderung mit einer Steuereinheit einstellbar ist.

5. Vorrichtung nach einem der Ansprüche 1 bis 4, dadurch gekennzeichnet, daß der Druckwechselgenerator (9) mit einem Elektromotor (21) angetrieben ist.

6. Vorrichtung nach einem der Ansprüche 2, 4 oder 5, dadurch gekennzeichnet, daß an der Drehachse (22) des Elektromotors (21) ein Antriebselement (23) befestigt ist, mit der die Drehbewegung der Drehachse (22) in eine Verschiebung eines Kolbens (11) übertragbar ist.

7. Vorrichtung nach einem der Ansprüche 2 bis 6, dadurch gekennzeichnet, daß der Druckwechselgenerator (9) über eine unmittelbar an den Pumpraum (8) angeschlossene, gegenüber der Länge der Zuflußleitung (14) und Abflußleitung (19) kurze Verbindungsleitung (7) mit dem Hohlraum (1, 2) in Verbindung steht, so daß der Druckwechselgenerator (9) nahe dem Hohlraum (1, 2) anzuordnen ist.

8. Vorrichtung nach einem der Ansprüche 2 bis 7, dadurch gekennzeichnet, daß die Zuflußleitung (14) und die Abflußleitung (19) in den Pumpraum (8) münden.

## Claims

1. A device for cleaning cavities, in particular tooth cavities and tooth root channels, comprising at least one supply line (14) for feeding a rinsing solution (16) to the cavity (1, 2) and at least one discharge line (19) for discharge of the rinsing solution (16) from the cavity (1, 2), wherein the through-flow of the rinsing solution (16) is caused by a pressure drop from the supply line (14) to the discharge line (19), and an arrangement with which cavitation with the generation and implosion of gas bubbles can be produced in the cavity (1, 2) by means of an alternating pressure generator (9) which communicates with the cavity (1, 2) by way of a connecting element (7), characterised in that the through-flow of the rinsing solution (16) is generated by a supply container (15) for causing the pressure drop, the supply container being disposed at a higher level than a catch container (20) in respect of the force of gravity, wherein the through-flow of the rinsing solution (16) and the cavitation conditions are adjustable in dependence on the difference in height between the containers (15, 20), and that the supply line (14) and discharge line (19) which are connected to the alternating pressure generator (9) have given flow resistances (17, 18) at which on the one hand the pressure difference for giving rise to the cavitation effect can be generated by the alternating pressure generator (9) and on the other hand the through-flow of the rinsing solution (16) from the supply line (14) to the discharge line (19) occurs with the given difference in height between the containers (15, 20).

2. A device according to claim 1 characterised in that the alternating pressure generator (9) has a movable piston with which the volume of a pump chamber (8) can be periodically varied.

3. A device according to claim 1 characterised in that the alternating pressure generator has a resilient diaphragm with which the volume of a pump chamber (8) can be periodically varied.

4. A device according to one of claims 2 and 3 characterised in that the frequency of the variation in volume is adjustable with a control unit.

5. A device according to one of claims 1 to 4 characterised in that the alternating pressure generator (9) is driven by an electric motor (21).

6. A device according to one of claims 2, 4 and 5 characterised in that fixed to the rotary spindle (22) of the electric motor (21) is a drive element (23) with which the rotary movement of the rotary spindle (22) can be converted into a sliding movement of a piston (11).

7. A device according to one of claims 2 to 6 characterised in that the alternating pressure generator (9) is in communication with the cavity (1, 2) by way of a communicating line (7) which is directly connected to the pump chamber (8) and which is short in relation to the length of the supply line (14) and the discharge line (19) so that the alternating pressure generator (9) is to be arranged close to the cavity (1, 2).

8. A device according to one of claims 2 to 7 characterised in that the supply line (14) and the discharge line (19) open into the pump chamber (8).

## Revendications

1. Dispositif permettant de nettoyer des cavités, en particulier des cavités de dents et des canaux de racines dentaires, comprenant au moins un conduit d'entrée (14) pour amener une solution de rinçage (16) dans la cavité (1, 2), et au moins un conduit d'écoulement (19) pour évacuer la solution de rinçage (16) de la cavité (1, 2), la circulation de la solution de rinçage (16) étant provoquée par une chute de pression depuis le conduit d'entrée (14) jusqu'au conduit d'écoulement (19), dispositif comprenant une installation avec laquelle on peut provoquer dans la cavité (1, 2) une cavitation avec production et implosion de bulles gazeuses au moyen d'un générateur alternatif à pression (9) relié à la cavité (1, 2) par un élément de liaison (7), caractérisé en ce que, pour induire la chute de pression, la circulation de la solution de rinçage (16) est produite par gravitation grâce à un récipient réserve (15) plus élevé qu'un récipient récepteur (20), la circulation de la solution de rinçage (16) et les comportements de cavitation étant réglables en fonction de la différence de hauteur entre les récipients (15, 20), et en ce que le conduit d'entrée (14) et le conduit d'écoulement (19) reliés au générateur alternatif à pression (9) présentent des résistances hydrauliques (17,18) prédéterminées au niveau desquelles peut d'une part être produite la différence de pression au travers du générateur alternatif à pression (9) pour provoquer la cavitation, et peut d'autre part se produire la circulation de la solution de rinçage (16) depuis le conduit d'entrée (14) jusqu'au conduit d'écoulement (19) compte tenu de la différence de hauteur particulière entre les récipients (15, 20).

2. Dispositif selon la revendication 1, caractérisé en ce que le générateur alternatif à pression (9) présente un piston (11) mobile avec lequel on peut modifier périodiquement le volume d'un compartiment de pompage (8).

3. Dispositif selon la revendication 1, caractérisé en ce que le générateur alternatif à pression (9) présente une membrane élastique avec laquelle on peut modifier périodiquement le volume d'un compartiment de pompage (8).

4. Dispositif selon une des revendications 2 ou 3, caractérisé en ce que la fréquence de la modification de volume est réglable avec un module de commande.

5. Dispositif selon une des revendications 1 à 4, caractérisé en ce que le générateur alternatif à pression (9) est entraîné par un moteur électrique (21).

6. Dispositif selon une des revendications 2, 4 ou 5, caractérisé en ce qu'un élément d'entraînement (23) est fixé à l'axe de rotation (22) du moteur électrique (21), élément avec lequel le mouvement de rotation de l'axe de rotation (22) est converti en translation d'un piston (11).

7. Dispositif selon une des revendications 2 à 6, caractérisé en ce que le générateur alternatif à pression (9) est en liaison avec la cavité (1, 2) par l'intermédiaire d'un conduit de liaison (7) relié directement au compartiment de pompage (8), conduit de liaison court par rapport à la longueur du conduit d'entrée (14) et au conduit d'écoulement (19), de sorte qu'on puisse disposer le générateur alternatif à pression (9) à proximité de la cavité (1, 2).

8. Dispositif selon une des revendications 2 à 7, caractérisé en ce que le conduit d'entrée (14) et le conduit d'écoulement (19) débouchent dans le compartiment de pompage (8).
